# EUROPEAN PATENT SPECIFICATION

(11) **EP 3 346 232 B1**
(45) Date of publication and mention of the grant of the patent: **28.02.2024**
(21) Application number: 16841933.1
(22) Date of filing: 31.08.2016
(51) Int. Cl.: G01B 11/24, G01B 11/245, G01B 21/04, G01B 21/20

(54) **SURFACE-SHAPE MEASURING DEVICE, SURFACE-SHAPE MEASURING METHOD AND SURFACE-SHAPE MEASURING PROGRAM**
OBERFLÄCHENFORMMESSVORRICHTUNG, OBERFLÄCHENFORMMESSVERFAHREN UND OBERFLÄCHENFORMMESSPROGRAMM
DISPOSITIF, MÉTHODE ET PROGRAMME DE MESURE DE FORME DE SURFACE

(30) Priority: 31.08.2015 JP 2015171301
(43) Date of publication of application: 11.07.2018
(73) Proprietor: Nikon Corporation, Tokyo 108-6290 (JP)
(72) Inventor: MIYAWAKI Takashi, Tokyo 108-6290 (JP)
(74) Representative: Hoffmann Eitle
(86) International application number: PCT/JP2016/075576
(87) International publication number: WO 2017/038903

(56) References cited:
- EP-A1- 2 607 838
- JP-A- H1 151 624
- JP-A- H07 332 954
- JP-A- 2003 161 615
- JP-A- 2012 093 225
- JP-A- 2012 093 225
- JP-A- 2012 132 682
- JP-A- 2012 220 338

## Description

### BACKGROUND

### 1. TECHNICAL FIELD

The present invention relates to a surface shape measurement apparatus and a surface shape measurement program.

### 2. RELATED ART

A shape measurement apparatus utilizing a laser distance meter is known as a shape measurement apparatus to measure the shape of a measurement object in a contactless manner (see Japanese Patent Application Publication No. Hei. 11-51624, hereinafter Patent Document 1, for example). A shape measurement apparatus is also proposed, which measures the shape of a measurement object based on the position and the inclination angle of a measurement surface (see Japanese Patent Application Publication No. 2003-161615, hereinafter Patent Document 2, for example).

JP 2012-093225 discloses another surface shape measurement apparatus.

EP 2 607838 A1 and JPH07332954 A also form part of the state of the art.

### PROBLEMS TO BE SOLVED

In the case of measuring the surface shape of a measurement object with a higher precision utilizing known surface shape data, the presence of an error in placement of the measurement object relative to a stage makes it unable to obtain a precise measurement result.

### SUMMARY

According to a first aspect of the present invention, there is provided a surface shape measurement apparatus as recited in Claim 1.

The calculation part may update the target placement position using the placement error, and may recalculate a placement error between an actual placement position of the measurement object on the stage and the target placement position based on surface shape data updated by the computation part. The computation part may further reupdate surface shape data of the measurement object using the recalculated placement error between the actual placement position of the measurement object on the stage and the target placement position.

Measurement using the measurement device is not performed again after the placement error is calculated.

The measurement device may include an angle measurement device which measures inclination of a surface of the measurement object at a measurement point using first probe light. The computation part may reupdate surface shape data of the measurement object based on an emission position and an emission direction of the first probe light and the reference shape data in a case of placement at the target placement position or an updated placement position updated using the placement error.

It may include a support which supports the measurement device. It may include a driving part which moves the support relative to the measurement object. It may include a control part which controls the driving part. The measurement device may include a distance measurement device which measures a distance to the measurement point using second probe light. The control part may cause the support to scan by the driving part using an output value of the distance measurement device such that a distance from the measurement device to the measurement point is constant.

The computation part may derive surface shape data of the measurement object by integral computation using an output of the angle measurement device.

The reference shape data may be design data of the measurement object.

According to a second aspect of the present invention, there is provided a surface shape measurement method as recited in Claim 8 below.

The method may include the calculation step to update the target placement position using the placement error and to recalculate a placement error between an actual placement position of the measurement object and the target placement position using the surface shape data reupdated in the reupdating step. It may include the reupdating step to further reupdate surface shape data of the measurement object using the recalculated placement error. They may be repeatedly performed.

The measurement device may include an angle measurement device which measures inclination of a surface of the measurement object at a measurement point using first probe light. In the updating step, surface shape data of the measurement object may be updated based on an emission position and an emission direction of the first probe light and the reference shape data for a case of placement at the target placement position. In the reupdating step, surface shape data of the measurement object may be reupdated based on the emission position and the emission direction of the first probe light and the reference shape data in a case of placement at an updated placement position updated using the placement error.

According to a third aspect of the present invention, there is provided a surface shape measurement program as recited in Claim 11 or a computer readable recording medium as recited in Claim 12.

### BRIEF DESCRIPTION OF THE DRAWINGS

Fig. 1 is an overview showing the entirety of a surface shape measurement apparatus in accordance with the present embodiment.
Fig. 2 shows a system configuration of the surface shape measurement apparatus.
Fig. 3 is a perspective view showing an example of a measurement object.
Fig. 4 is a cross-sectional view and an enlarged view illustrating a surface shape to be measured.
Fig. 5 is an illustration of the configuration of a measurement unit and the principle of measuring a distance and an angle.
Fig. 6 is an illustration of derivation of the surface shape.
Fig. 7 is an illustration of relative movement of a measurement object and a head.
Fig. 8 is an illustration of a measurement path of a measurement surface.
Fig. 9 is an illustration of the operation of a second support.
Fig. 10 is an illustration of a detection method to detect a rotation angle of the second support.
Fig. 11 is an illustration of a rotation angle of the head.
Fig. 12 is an illustration of a placement error of the measurement object.
Fig. 13 is a schematic illustration of calculation of the placement error.
Fig. 14 is an illustration of the relationship between a position near a measurement point and probe light.
Fig. 15 is a flow chart representing a procedure to obtain a surface shape.

### DESCRIPTION OF EXEMPLARY EMBODIMENTS

Hereinafter, (some) embodiment(s) of the present invention will be described. The embodiment(s) do(es) not limit the invention, the scope of the invention being defined in the appended claims.

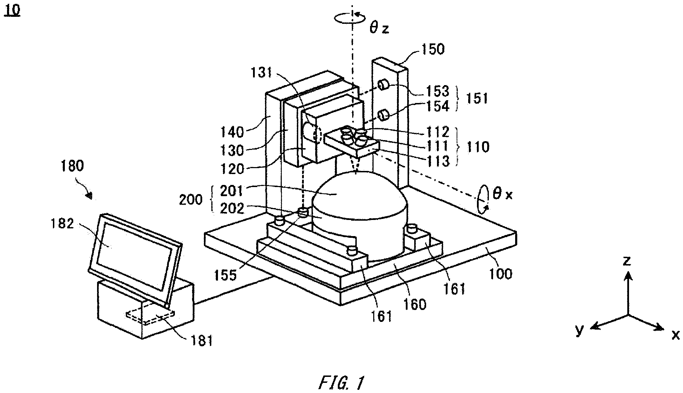

Fig. 1 is an overview showing the entirety of a surface shape measurement apparatus 10 in accordance with the present embodiment. The surface shape measurement apparatus 10 is an apparatus which is dedicated to a rotationally symmetric surface as its measurement target and strictly measures a surface shape. Note that, in descriptions of the present embodiment, the term "surface shape" may refer to the geometric shape of a surface itself, or may refer to shape information such as the amount of unevenness in its shape and angles, and measurement results and shape data including them.

The surface shape measurement apparatus 10 includes a base 100 as a base table part, and a first frame 140 and a second frame 150 which are securely fixed to the base 100. Each component of the surface shape measurement apparatus 10 related to sensing is assembled directly or indirectly to any of the base 100, the first frame 140 and the second frame 150.

The upper surface of the base 100 is a horizontal plane, and an axis in the horizontal plane is defined as an x-axis and an axis in the horizontal plane and orthogonal to the x-axis is defined as a y-axis. Also, a z-axis is defined in a vertical direction orthogonal to the horizontal plane. Also, the upward vertical direction is defined as a positive z-axis direction. Note that each subsequent figure clearly shows which direction the figure is observed in with respect to the x-y-z coordinate system shown in Fig. 1 in accordance with the above definitions.

An X-Y stage 160 is stacked on the upper surface of the base 100, and the X-Y stage 160 can parallelly move in x-y directions on the upper surface of the base 100 and also rotationally move around the z-axis. Note that, in the subsequent descriptions, rotational movement around the z-axis may be referred to as rotation in a θz direction or the like.

The X-Y stage 160 has a function as a table on which a measurement object 200 is placed, and fixes the measurement object 200 via a chuck 161. The measurement object 200 includes a measurement surface 201 and a holding part 202, and the chuck 161 clamps the holding part 202. The measurement surface 201 as a measurement target is a substantially rotationally symmetric surface having a rotational symmetry axis parallel to the z-axis in the attitude of Fig. 1. Here, the substantially rotationally symmetric surface does not refer to the exact rotationally symmetric surface, but refers to a surface in which minute unevenness exists in an asymmetric manner. If the measurement surface is, for example, a spherical lens, such minute unevenness may be generated as a processing error occurring in a polishing step of the fabrication process. The surface shape measurement apparatus 10 in accordance with the present embodiment is an apparatus which measures a measurement surface, which is a rotationally symmetric surface as a whole but has minute unevenness that is unevenly distributed therein as observed in a locally enlarged view, to acquire more precise surface shape information including information of the shape of such unevenness.

The measurement object 200 is placed on the X-Y stage 160 such that the rotational symmetry axis of the measurement surface 201 and the axis of rotation of the X-Y stage 160 in the θz direction coincide with each other. The measurement surface 201 of the measurement object 200 placed in this manner is rotationally moved around the rotational symmetry axis, and its surface shape is measured.

The first frame 140 is a supporting frame established vertically in the z-axis direction from the base 100. The first frame 140 supports the second support 130 above its y-z surface, and the second support 130 supports the first support 120 on a surface opposite to the surface supported by the first frame 140. The first support 120 supports the measurement unit 110 on a surface opposite to the surface supported by the second support 130. The measurement unit 110 is positioned in space above the measurement object 200 placed on the X-Y stage 160. The measurement unit 110, the first support 120 and the second support 130 are components of a head which moves relative to the measurement surface 201.

The second support 130 can parallelly move in the y-z plane relative to the first frame 140 by driving force of the later-described actuator disposed in the first frame 140 and a transmission mechanism disposed astride them. Here, a minus z-axis direction is a direction toward the measurement surface 201 of the measurement object 200 in an initial state of the surface shape measurement apparatus 10 as shown in the figure. The first support 120 can rotationally move around the x-axis relative to the second support 130 by driving force of the later-described actuator disposed in the second support 130 and a transmission mechanism disposed astride them. Note that, in the subsequent descriptions, rotational movement around the x-axis may be referred to as rotation in a θx direction or the like. The amount of movement of the second support 130 in the z direction relative to the first frame 140 is detected by the later-described Z sensor 155.

The angle of rotation of the first support 120 in the θx direction is detected by a rotary encoder 131 disposed in the second support 130. The measurement unit 110 includes a distance measurement device 111 and an angle measurement device 112, and a holder 113 supporting them. The distance measurement device 111 measures the distance to a measurement point on the measurement surface 201, and the angle measurement device 112 measures the inclination of the measurement surface at the measurement point. Specific configurations will be described later using figures. The holder 113 is fixed to the first support 120, and the measurement unit 110 does not move relative to the first support 120.

The second frame 150 is a supporting frame established vertically in the z-axis direction from the base 100. The second frame 150 fixes and supports an interferometer unit 151 above its x-z surface. The interferometer unit 151 is a sensor unit to detect the amount of movement of the second support 130 in the y direction and the angle of rotation of the second support 130 in the θx direction. The interferometer unit 151 specifically includes a first interferometer 153 and a second interferometer 154, each of which is a laser lightwave interferometric distance meter. A laser emitting part of the first interferometer 153 and a laser emitting part of the second interferometer 154 are disposed to be spaced apart from each other along the z-axis direction. Specific configurations of the interferometer unit 151 will be described later using figures.

Fig. 1 shows an aspect of the first frame 140 and the second frame 150 where they are fixed to the base 100 independently of each other. The second frame 150 supports the interferometer unit 151 that performs precise measurement, and therefore is preferably not connected directly with the first frame 140 that supports the movable head and may vibrate.

The control unit 180 includes a system control part 181 configured of, for example, a CPU, and a user interface 182 which receives an input from a user and presents measured surface shape information. The system control part 181 controls the entire surface shape measurement apparatus 10. The user interface 182 includes a liquid crystal display provided with a touch panel which receives an input from the user, for example.

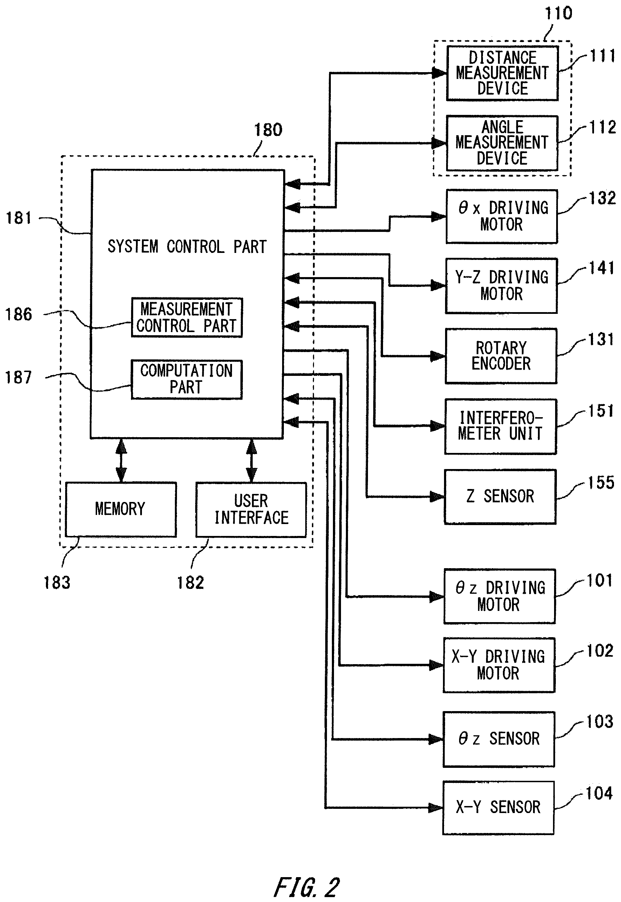

Fig. 2 shows a system configuration of the surface shape measurement apparatus 10. Specifically, the figure shows the relationship with main control targets for controls performed by the system control part 181.

The system control part 181 includes a measurement control part 186 which sends a control signal to each control target lined on the right side of the figure and controls a sequence of measurement steps, and an computation part 187 which receives sensing results and performs various computations for identifying a surface shape. The measurement control part 186 and the computation part 187 may each be a virtual functional part of a CPU, or may have a hardware configuration such as an ASIC which is at least partially independent of the CPU.

The user interface 182 receives, from the user, inputs such as a condition about measurement, basic information of the measurement object 200 and an instruction of starting measurement, and sends them to the system control part 181. Also, the user interface 182 receives, from the system control part 181, the status of progress of a measurement sequence performed by the measurement control part 186 and surface shape information computed by the computation part 187, and displays them.

The control unit 180 includes a memory 183 configured of a flash memory, for example. The memory 183 may be configured of a plurality of storage media. The memory 183 stores various programs performed by the system control part 181, including a measurement control program performed by the measurement control part 186 and a computation program performed by the computation part 187. The memory 183 also functions as a working memory of computation performed by the computation part 187 or the like. The memory 183 also has a function to retain various parameters and data which are input by the user via the user interface 182 or sent from external equipment via a network.

The measurement control part 186 controls the distance measurement device 111 and the angle measurement device 112 constituting the measurement unit 110. The measurement control part 186 sends a control signal to the distance measurement device 111 to start distance measurement, and receives its output. Similarly, it sends a control signal to angle measurement device 112 to start angle measurement, and receives its output. The measurement control part 186 delivers the received outputs to the computation part 187.

The measurement control part 186 controls a θx driving motor 132 which rotates the first support 120 in the θx direction relative to the second support 130. The θx driving motor 132 is the above-described actuator disposed in the second support 130, and a brushless motor can be used for it, for example. The measurement control part 186 sends, when the measurement unit 110 is to be rotationally moved in the θx direction, a drive signal according to the rotation angle to the θx driving motor 132.

The measurement control part 186 controls a Y-Z driving motor 141 which moves the second support 130 in y-z directions relative to the first frame 140. The Y-Z driving motor 141 is the above-described actuator disposed in the first frame 140, and two brushless motors respectively corresponding to the y direction and the z direction can be used for it, for example. The measurement control part 186 sends, when the measurement unit 110 is to be parallelly moved in y-z directions, a drive signal according to the movement amount to the Y-Z driving motor 141.

The measurement control part 186 sends a control signal to the rotary encoder 131 to start rotation angle detection, and receives its output. The measurement control part 186 delivers the received output to the computation part 187. Similarly, the measurement control part 186 sends a control signal to the interferometer unit 151 to start distance detection, and receives its output. The measurement control part 186 delivers the received output to the computation part 187. The computation part 187 computes, based on the received outputs, the amount of movement of the second support 130 in the y direction and the angle of rotation of the second support 130 in the θx direction relative to the first frame 140.

The measurement control part 186 sends a control signal to the Z sensor 155 to start distance detection, and receives its output. The measurement control part 186 delivers the received outputs to the computation part 187. The Z sensor 155 is a distance sensor which detects the amount of movement of the second support 130 in the z direction relative to the first frame 140. The Z sensor 155 is configured of one laser lightwave interferometric distance meter, for example.

The measurement control part 186 controls a θz driving motor 101 which rotates the X-Y stage 160 in the θz direction relative to the base 100. The θz driving motor 101 is, for example, a brushless motor disposed in the base 100. The measurement control part 186 sends, when the measurement surface 201 of the measurement object 200 is to be rotationally moved in the θz direction, a drive signal according to the rotation angle to the θz driving motor 101.

The measurement control part 186 controls an X-Y driving motor 102 which moves the X-Y stage 160 in x-y directions relative to the base 100. The X-Y driving motor 102 consists of, for example, two brushless motors disposed in the base 100 and respectively corresponding to the x direction and the y direction. The measurement control part 186 sends, when the measurement surface 201 of the measurement object 200 is to be parallelly moved in x-y directions, a drive signal according to the movement amount to the X-Y driving motor 102.

The measurement control part 186 sends a control signal to a θz sensor 103 to start rotation angle detection, and receives its output. The measurement control part 186 delivers the received output to the computation part 187. The θz sensor 103 is a rotation angle detection sensor which detects the angle of rotation of the X-Y stage 160 in the θz direction relative to the base 100. The θz sensor 103 is configured of a rotary encoder, for example.

The measurement control part 186 sends a control signal to an X-Y sensor 104 to start movement amount detection, and receives its output. The measurement control part 186 delivers the received output to the computation part 187. The X-Y sensor 104 is a movement amount detection sensor which detects the amount of movement of the X-Y stage 160 in x-y directions relative to the base 100. The X-Y sensor 104 is configured of, for example, two laser lightwave interferometric distance meters respectively disposed toward the x direction and the y direction.

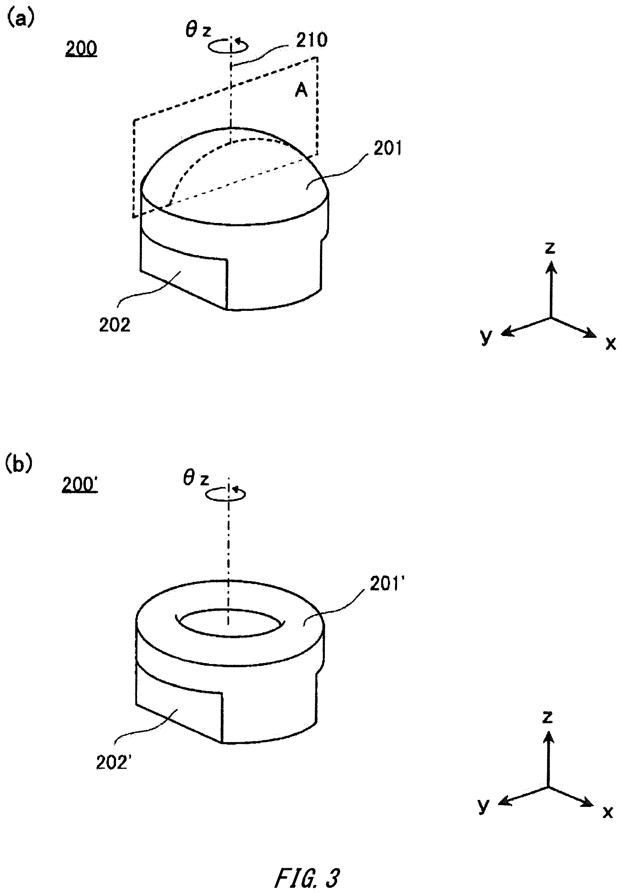

Next, a description will be made of the measurement object. Fig. 3 (a) is a perspective view showing the measurement object 200 as an example of the measurement object to be measured by the surface shape measurement apparatus 10 in the present embodiment, and Fig. 3 (b) is a perspective view of a measurement object 200' as an example of another measurement object.

As described above, the surface shape measurement apparatus 10 in the present embodiment is an apparatus which strictly measures the surface shape of a substantially rotationally symmetric surface, and therefore at least part of the surface of a measurement object is a substantially rotationally symmetric surface. The measurement surface 201 of the measurement object 200 is a spherical surface protruding in the plus z-axis direction. The measurement surface 201 generally has, assuming that its rotational symmetry axis 210 is the z-axis and its radius is c, a shape obtained by a single rotation of (c²-x²)^{1/2} in the first quadrant of the x-z plane around the z-axis.

The measurement surface has a shape obtained by a single rotation of the function represented in the first quadrant of the x-z plane around the z-axis, and may have a shape having a concaved top surface such as a measurement surface 201' of the measurement object 200'. Note that, although the measurement objects 200 and 200' shown in the figure respectively include holding parts 202 and 202' so as to be easily fixed to the chuck 161, the surface shape of a measurement object not including such a holding part can even be measured as long as it is fixed to the X-Y stage 160 via some tool, for example.

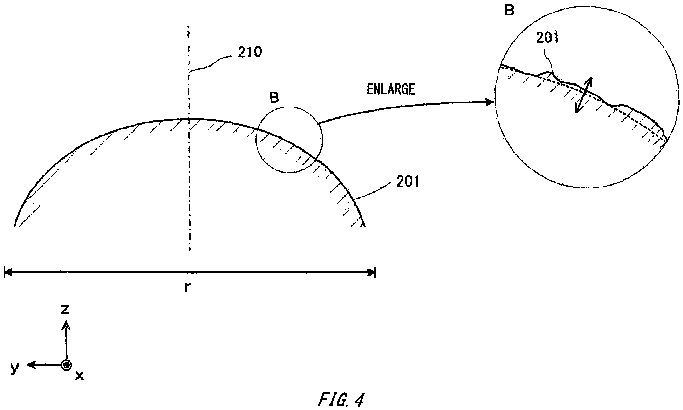

Fig. 4 is a cross-sectional view and an enlarged view illustrating a surface shape to be measured. The cross-sectional view of Fig. 4 represents a section of the measurement object 200 taken in the plane A including the rotational symmetry axis 210 shown in Fig. 3 (a). As described above, the measurement surface 201 is a rotationally symmetric surface as a whole, but has minute unevenness as seen in a locally enlarged view. The present embodiment assumes a measurement surface whose shape projected on the x-y plane has an outer perimeter of around ϕ100 mm (r in the figure). Then, the resolution for the depth direction of unevenness can be set to around 1 nm in accordance with the configuration and measurement principle of the measurement unit as described later. Here, the term "resolution" refers to the finest unit at which the shape of a measurement target object can be identified as computed row data, and the "precision" at which the probability of measurement results is ensured is around 10 nm in the present embodiment. However, these orders may be changed depending on the configuration of the apparatus, the precision of sensors or the like. Note that the depth direction of unevenness refers to the direction of the arrow shown in the enlarged view. More specifically, it refers to the direction orthogonal to the rotationally symmetric surface (indicated by the dotted line in the enlarged view).

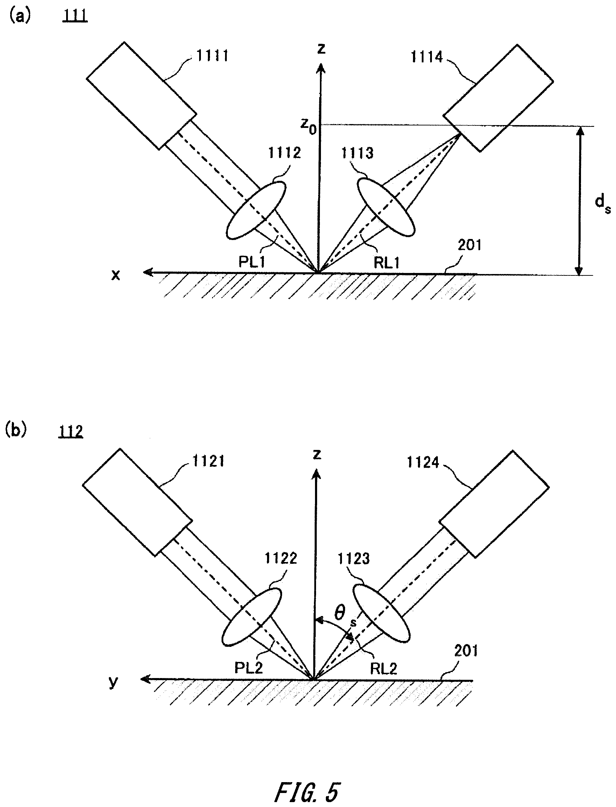

Next, a description will be made of the measurement unit 110. Fig. 5 is an illustration of the configuration and measurement principle of the measurement unit 110. In particular, Fig. 5 (a) is an illustration of the configuration and measurement principle of the distance measurement device 111, and Fig. 5 (b) is an illustration of the configuration and measurement principle of the angle measurement device 112. Each figure represents an example where a vertex of the measurement surface 201 is positioned at the origin of coordinates, and in which case the vertex is set as the measurement point.

The distance measurement device 111 is configured of a first light source 1111 which generates first probe light, a condenser lens 1112 which condenses the first probe light generated by the first light source 1111 (first irradiation light PL1) to irradiate a measurement point on the measurement surface 201, a condenser lens 1113 which condenses the first probe light reflected at the measurement point (first reflected light RL1), a photodetector 1114 which detects the position of the first reflected light RL1, and the like.

The angle measurement device 112 is configured of a second light source 1121 which generates second probe light, a condenser lens 1122 which condenses the second probe light generated by the second light source 1121 (second irradiation light PL2) to irradiate a measurement point on the measurement surface 201, a collimator lens 1123 which collimates the second probe light reflected at the measurement point (second reflected light RL2), a photodetector 1124 which detects the position of the second reflected light RL2, and the like.

The first light source 1111 and the second light source 1121 are laser light sources with stabilized oscillation wavelength, optical output, beam pointing and the like, and a fiber laser, a DFB semiconductor laser or the like is used for them, for example. Output parts of the first light source 1111 and the second light source 1121 are provided with a collimator, and the first irradiation light PL1 and the second irradiation light PL2 converted into parallel light pencils are output from the respective light sources. The photodetectors 1114 and 1124 are detectors to detect the positions of the first reflected light RL1 and the second reflected light RL2, respectively, and a QPD (quadrant photodetector), an image capturing device such as CMOS or the like can be used for them, for example.

For the distance measurement device 111, the first irradiation light PL1 emitted from the first light source 1111 is condensed by the condenser lens 1112 and incident at the measurement point. The first reflected light RL1 reflected at the measurement point is condensed by the condenser lens 1113 and incident in the photodetector 1114. With the distance measurement device 111, even if the inclination of the reflection surface at the measurement point is varied (tilted), the incident position of the first reflected light RL1 condensed and incident in the photodetector 1114 is not varied. On the other hand, if the position of the measurement point is varied (shifted) in the upward/downward direction (z-axis direction), the incident position of the first reflected light RL1 condensed and incident in the photodetector 1114 is varied. Thus, a distance dₛ from a reference position z₀ of the measurement unit 110 to the measurement point can be calculated based on a position detecting signal output from the photodetector 1114 to the measurement control part 186. Note that the reference position z₀ may be, for example, the z coordinate of the rotation axis around which the first support 120 is rotated in the θx direction, or may be the z coordinate of a reference plane of the measurement unit 110 when it is opposed to the measurement surface 201.

For the angle measurement device 112, the second irradiation light PL2 emitted from the second light source 1121 is condensed by the condenser lens 1122 and incident at the measurement point. The second reflected light RL2 reflected at the measurement point is collimated by the collimator lens 1123 and incident in the photodetector 1124. With the angle measurement device 112, even if the position of the measurement point is varied (shifted) in the upward/downward direction, the incident position of the second reflected light RL2 incident in the photodetector 1124 is almost not varied. On the other hand, if the inclination of the reflection surface at the measurement point is varied (tilted), the incident position of the second reflected light RL2 incident in the photodetector 1124 is varied. Thus, based on an angle detecting signal output from the photodetector 1124 to the measurement control part 186, a reflection angle θₛ of the reflection surface at the measurement point can be calculated, and further an inclination angle that is the inclination of the reflection surface (described later) can be calculated.

In the present embodiment, the distance measurement device 111 and the angle measurement device 112 are fixed to the holder 113, being adjusted such that a first reference plane formed by the first irradiation light PL1 and the first reflected light RL1 and a second reference plane formed by the second irradiation light PL2 and the second reflected light RL2 in the case where the inclination of the reflection surface at the measurement point is zero are orthogonal to each other. For positioning of the figure, the first reference plane is in the x-z plane and the second reference plane is in the y-z plane. Also, the distance measurement device 111 and the angle measurement device 112 are fixed to the holder 113, being adjusted such that the reflection points (measurement points) of the respective probe light overlap with each other at a reference distance d₀ from the reference position z₀. Note that Fig. 5 is depicted for the case where z₀ = d₀ = dₛ.

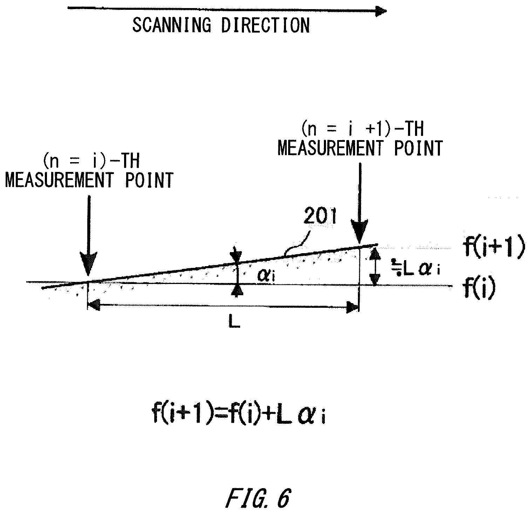

Next, a description will be made of a method for deriving the surface shape. Fig. 6 is an illustration of derivation of the surface shape. It is regarded that the measurement unit 110 scans from the left side to the right side of the paper in the figure, and performs measurement at every sampling interval L. The figure represents, assuming that the number of times of sampling is n, the surface shape of the measurement surface 201 in the (n = i)-th measurement and the (n = i + 1)-th measurement.

As described above, the surface shape measurement apparatus 10 in accordance with the present embodiment has a precision of around 10 nm for the depth direction of unevenness. If it is attempted to obtain a precision of 10 nm only with the distance measurement device 111, it is thus required to prepare a distance measurement device having an output precision of 10 nm. Such a distance measurement device is not very practical due to being expensive and large in size. Thus, for the surface shape measurement apparatus 10 in accordance with the present embodiment, the distance measurement device 111 itself is a distance measurement device only having a capability of a lower precision than the target precision, and the angle measurement device 112 is provided in conjunction with the distance measurement device 111.

As shown in the figure, if an inclination angle as the inclination of the reflection surface is calculated as αᵢ (rad) from an output of the angle measurement device 112 in the (n = i)-th measurement, the amount of displacement to the (n = i)-th measurement point in the depth direction is approximated as Lαᵢ if αᵢ is a minute angle. Accordingly, if the depth-direction coordinate at the (n = i)-th time is f(i), the coordinate f(i+1) at the (n = i + 1)-th time is calculated as f(i) + Lαᵢ.

Here, if Lαᵢ is 10 nm and assuming that L = 1 mm, αᵢ is 10 µrad. That is, if the angle measurement device 112 has a capability of 10 µrad as its output precision, measurement can be performed with a precision of 10 nm in the depth direction even if the sampling interval is around 1 mm. To configure the surface shape measurement apparatus, it is easy to prepare an angle measurement device having an output precision of 10 µrad to perform control at a sampling interval of 1 mm, compared to preparing a distance measurement device with an output precision of 10 nm. Also, the sampling control at L = 1 mm is relatively easy, and therefore adopting a shorter sampling interval allows further enhancement of the precision in the depth direction.

On the other hand, it is desirable to use the distance measurement device 111 in order that the measurement point as the target of the angle measurement device 112 and the reflection point of the second probe light coincide with each other. That is, if the scanning is performed such that the distance between the reference position z₀ of the measurement unit 110 and the measurement surface 201 is kept at the reference distance d₀ while monitoring the output of the distance measurement device 111, both measurement points of the distance measurement device 111 and the angle measurement device 112 coincide with each other, and therefore the measurement control part 186 can accurately grasp the measurement point being measured by the angle measurement device 112. If the distance measurement device 111 is not provided in conjunction, it is required to prepare another apparatus for accurately grasping the coordinates of the measurement point for the angle measurement device 112.

Here, if the distance to the measurement surface 201 is kept at the reference distance d₀, an error range of the distance may be much wider than that of the depth-direction precision with which measurement is to be performed using the angle measurement device 112. That is, the output precision required for the distance measurement device 111 may be lower than the depth-direction precision with which measurement is to be performed. For example, it may be around 10 µm if the depth-direction precision with which measurement is to be performed is around 10 nm.

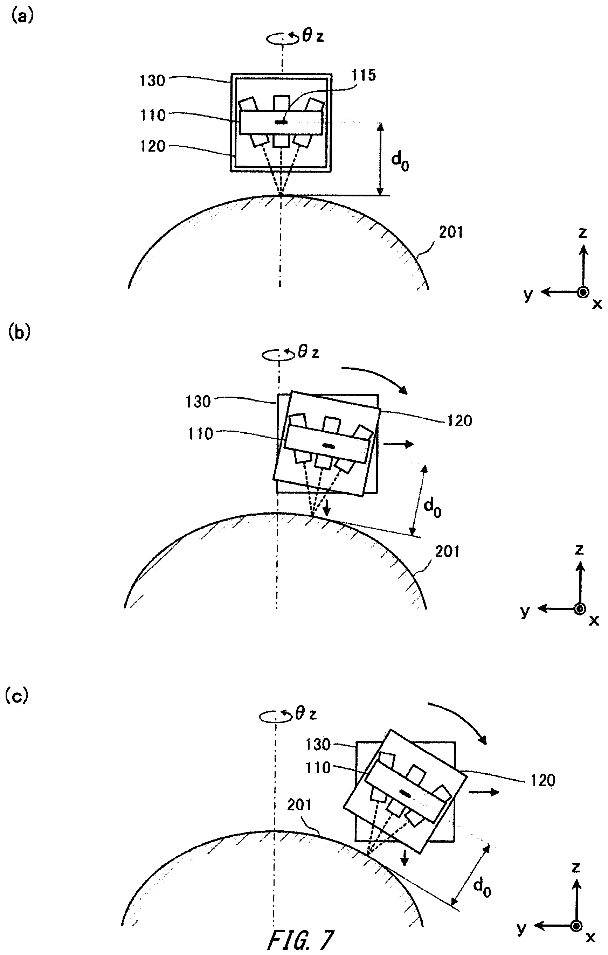

Next, a description will be made of the operation of the measurement object 200 and the head in measurement. Fig. 7 is an illustration of relative movement of the measurement object 200 and the head. Here, a reference position 115 of the head is set on the rotation axis around which the first support 120 is rotated in the θx direction.

Fig. 7 (a) shows an initial state in which the vertex of the rotationally symmetric surface can be measured. The measurement control part 186 acquires rotationally symmetric surface information as basic information of the measurement object 200 from an input by the user or the like. However, the rotationally symmetric surface information is design data, for example, and does not include information of minute unevenness created in processing or the like.

Using the acquired rotationally symmetric surface information, the measurement control part 186 moves the first support 120, the second support 130 and the X-Y stage 160 such that the reference position 115 is positioned above and at a distance of d₀ from the vertex of the rotationally symmetric surface that is the measurement surface 201. Then, the measurement control part 186 moves the measurement unit 110 to oppose the tangent plane of the vertex. In subsequent scanning processes as well, the measurement control part 186 controls the measurement unit 110 to oppose the tangent plane at the measurement point calculated from the acquired rotationally symmetric surface information. That the measurement unit 110 opposes a tangent plane means that the tangent plane is also orthogonal to the first reference plane and the second reference plane as described above.

Fig. 7 (b) shows the case where the measurement point is moved a little toward the periphery from the vertex of the measurement surface 201. The measurement control part 186 parallelly moves the second support 130 in the y direction and the z-axis direction, and also rotationally moves the first support 120 in the θx direction. More specifically, the movement is performed such that the distance from the reference position 115 is kept at d₀ while the tangent plane at the targeted measurement point and the measurement unit 110 oppose. The measurement control part 186 simultaneously rotationally moves the X-Y stage 160 in the θz direction.

Then, the measurement control part 186 does not parallelly move the X-Y stage 160 in x-y directions. The measurement control part 186 parallelly moves the X-Y stage 160 in x-y directions when the measurement object 200 is to be moved to the position of the initial state after the user places the measurement object 200 on the X-Y stage 160, but does not perform the parallel movement during the measurement sequence for measuring the measurement surface 201. Accordingly, although the function to move the X-Y stage 160 in x-y directions is useful when the measurement object 200 is to be moved to the position of the initial state, the movement function can be omitted.

Also, the measurement control part 186 utilizes an output of the Z sensor 155 when the measurement unit 110 is to be moved to the position of the initial state. However, in scanning processes after the measurement unit 110 reaches the initial state, the measurement control part 186 can grasp the z direction position from the output of the distance measurement device 111, and therefore the output of the Z sensor 155 may not be monitored.

Fig. 7 (c) shows the case where the measurement point is further moved toward the periphery. The measurement control part 186 further parallelly moves the second support 130 in the y direction and the z direction, and also further rotationally moves the first support 120 in the θx direction. The measurement control part 186 continues to rotationally move the X-Y stage 160 in the θz direction.

As apparent from the transition from Fig. 7 (a) to Fig. 7 (c), scanning of the head relative to the measurement surface 201 is performed only in a direction along the y-axis, and does not involve parallel movement in the x direction. Also, scanning in the y direction is performed only in the negative y region in the figure, and scanning is not performed in the positive region. That is, by rotationally moving the X-Y stage 160 in the θz direction, the entire measurement surface can be measured by such a simple movement control. In other words, the degree of freedom that the head is to have and the degree of freedom that the stage on which the measurement object is placed is to have are optimized for the dedicated purpose of measuring the surface shape of a rotationally symmetric surface. In this manner, the drive configuration of the head and the drive configuration of the stage can each be simplified. In particular, simplification of the drive configuration of the head contributes to weight reduction of the head and also contributes to speed enhancement of movement of the head.

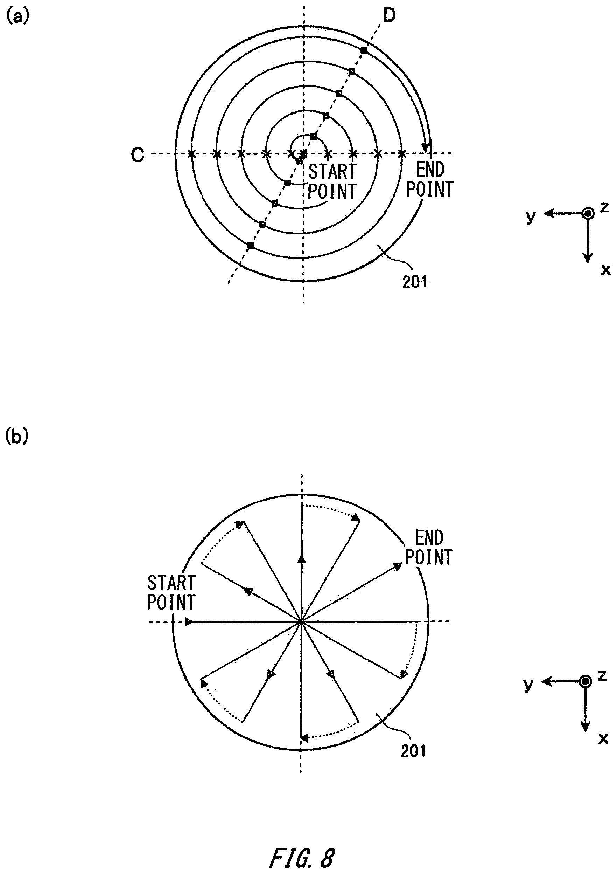

Fig. 8 is an illustration of a measurement path of the measurement surface 201. Fig. 8 (a) shows a measurement path formed by the controls described using Fig. 7 as observed in the z direction. Here, the measurement path is a locus obtained by connecting adjacent measurement points.

A start point is the vertex of the rotationally symmetric surface, and corresponds to the initial state as shown in Fig. 7 (a). As apparent from the figure, the measurement path forms a spiral. As measurement is performed along the path, the measurement control part 186 receives outputs from the angle measurement device 112 in the order along the path. However, in order to obtain a cross-sectional view in a section along the line C in the figure, for example, the measurement results at the cross-marked points where the line C and the spiral path intersect are extracted and rearranged. Similarly, in order to obtain a cross-sectional view in a section along the line D, the measurement results of the square-marked points where the line C and the spiral path intersect are extracted and rearranged. If an intersection point is not a measurement point, it is required to perform interpolation from the measurement results of neighboring measurement points for the calculation.

Note that the inclination angle at the measurement point calculated from the output of the angle measurement device 112 is calculated as an angle formed by the tangent plane at a measurement point calculated from the rotationally symmetric surface information and an actual tangent plane at the measurement point. Accordingly, if the depth in a direction along a certain path is to be calculated, the computations described using Fig. 6 are performed after converting it into angle along the direction. Note that computations from when the output of the angle measurement device 112 is obtained until when the surface shape is calculated are performed by the computation part 187.

Fig. 8 (b) shows a measurement path of another example as observed in the z direction. If information of the cross-sectional shape taken in a particular section is to be obtained without performing the above-described interpolation, the measurement path may be set to form a radial locus centered at the vertex as shown in the figure. If a plurality of pieces of cross-sectional shape information is to be obtained, setting the start point near the end portion of the measurement surface 201 rather than at the vertex allows the measurement path to be set in a unicursal manner. If such a measurement path is to be set, the measurement control part 186 performs scanning by moving the head also in the positive y region described in Fig. 7. Also, the measurement control part 186 performs rotational movement of the X-Y stage 160 in the θz direction only when movement is performed along the arc paths in the figure. Then, the measurement control part 186 does not perform movement of the first support 120 and the second support 130.

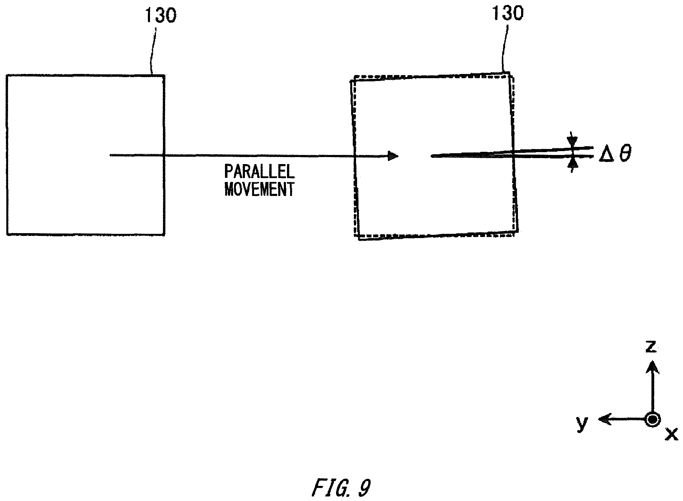

Next, a description will be made of the operation of the second support 130. Fig. 9 is an illustration of the operation of the second support 130. As described above, the second support 130 is moved by driving force that the Y-Z driving motor 141 generates by receiving, from the measurement control part 186, a control signal instructing to move in the y direction and a control signal instructing to move in the z direction.

However, in practice, it is difficult for the second support 130 to parallelly move as instructed by the control signals. For example, if the second support 130 parallelly moves in the minus y direction according to a control signal from the measurement control part 186 as shown in the figure, the attitude of the second support 130 is supposed to be maintained as indicated by the dotted line, but rotational movement by Δθ in the θx direction as indicated by the solid line is involved in practice. Such a rotational component is generated due to warping of a transmission mechanism to transmit driving force, a guiding mechanism to guide relative sliding movement and the like which are provided between the first frame 140 and the second support 130. Since the surface shape measurement apparatus 10 in accordance with the present embodiment performs precise measurement on the order of nanometers, such a minute rotational component is unignorable. Thus, the surface shape measurement apparatus 10 measures this rotational component Δθ using the first interferometer 153 and the second interferometer 154, which are two laser lightwave interferometric distance meters.

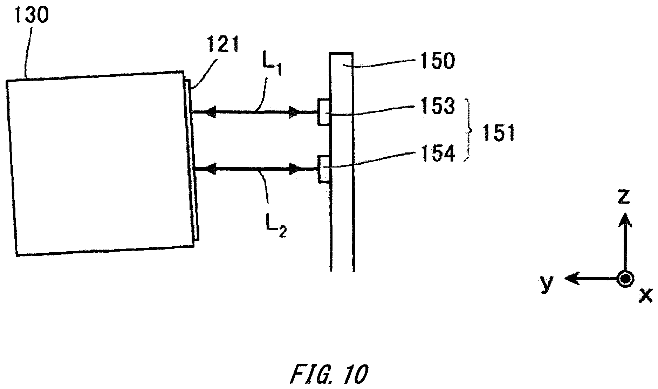

Fig. 10 is an illustration of a detection method to detect the angle of rotation of the second support 130 in the θx direction. As described above, the laser emitting part of the first interferometer 153 and the laser emitting part of the second interferometer 154 are disposed in the second frame 150 so as to be spaced apart from each other along the z-axis direction. On an x-z plane that is a side surface of the second support 130, a mirror surface 121 is provided as a reflection surface of laser beams. A laser beam L₁ emitted from the first interferometer 153 returns to the first interferometer 153 and a laser beam L₂ emitted from the second interferometer 154 returns to the second interferometer 154. Although the mirror surface 121 may be two reflection surfaces corresponding to the respective laser beams, it is one rectangular reflection surface extending in the z direction in the present embodiment in consideration of parallel movement of the second support 130 in the z direction. Such a rectangular reflection surface always reflects both a laser beam from the first interferometer 153 and a laser beam from the second interferometer 154 in a range of movement of the second support 130 in the z direction.

The computation part 187 calculates an angle Δθ of rotation of the second support 130 in the θx direction from the difference between two measured distances obtained from the outputs of the first interferometer 153 and the second interferometer 154 and the y-z coordinates of the respective light emitting parts. Also, the first interferometer 153 and the second interferometer 154 are both originally distance meters to measure a distance in the y direction, and therefore the computation part 187 also calculates the amount of parallel movement of the second support 130 in the y direction. Specifically, the computation part 187 calculates the amount of parallel movement of the θx rotation center axis of the second support 130 in the y direction from two measured distances obtained from the outputs of the first interferometer 153 and the second interferometer 154, the y-z coordinates of the respective light emitting parts and the y-z coordinates of the θx rotation center axis.

Note that, in order that reflected laser beams return to the respective interferometers, a retroreflective material instead of the mirror surface 121 may be placed as the reflection surface provided on the side surface of the second support 130. Also, although the laser emitting part is provided to the second frame 150 and the mirror surface 121 is provided to the second support 130 because of ease of their placement in the present embodiment, it may be reversed. In particular, by arranging one of two or more light emitting parts so as to coincide with the axis of rotation of the first support 120 in the θz direction, both the amount of parallel movement in the y direction and the angle of rotation in the θz direction can be further easily and precisely detected.

Also, while two interferometers are disposed along the z direction to detect the angle of rotation of the second support 130 in the θz direction and the amount of parallel movement of the second support 130 in the y direction in the present embodiment, the amount of parallel movement in the z direction can be a target to be detected together with the angle of rotation in the θz direction. For example, by providing two light emitting parts spaced apart in the y direction on the base 100 and causing reflection at a mirror surface provided on the lower surface (an x-y plane) of the second support 130, the angle of rotation in the θz direction and the amount of parallel movement in the z direction can be detected by a method similar to the above.

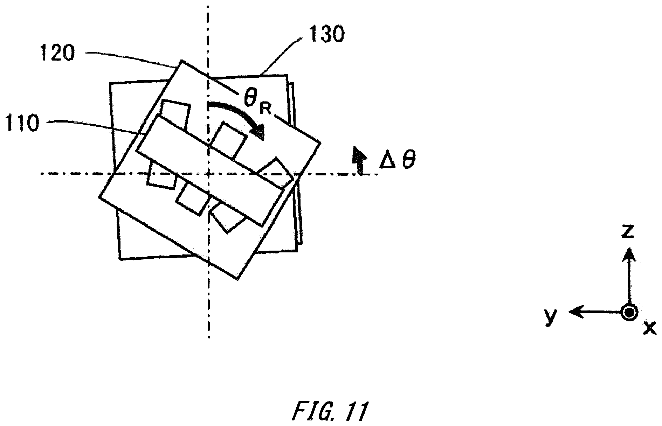

The measurement control part 186 sends, when the measurement unit 110 is to be rotated in the θx direction, a control signal according to the angle of the rotation to the θx driving motor 132, which rotationally moves the first support 120. As described above, the second support 130 also rotates in the θx direction in practice, and therefore the sum of the rotation angle of the first support 120 and the rotation angle of the second support 130 is to be considered as the whole of the head. Fig. 11 is an illustration of the rotation angle of the head to be calculated by the computation part 187.

If it is detected by the interferometer unit 151 that the second support 130 is rotated by Δθ in the θx direction with respect to the second frame 150 (that is, with respect to the first frame 140) and it is detected by the rotary encoder 131 that the first support 120 is rotated by θ_{R} in the θx direction with respect to the second support 130, the computation part 187 grasps that the measurement unit 110 is rotated by θ_{R} + Δθ in the θx direction relative to the coordinate system with respect to the base 100. In the present embodiment, even if the detected rotation angle is different from a target value (θ_{R}), the measurement control part 186 does not perform a feedback control for converging it to the target value. Even if some error angle (Δθ) is included, the surface shape at the measurement point can be measured so as to be utilized to grasp the entire shape of the measurement surface 201, as long as the measurement point on the measurement surface 201 can be accurately grasped. If surface shape information at the measurement point for the target value is required, it is required to perform an interpolation process using the measurement results of neighboring measurement points. By omitting the feedback control in this manner, the time it takes to complete measurement of the entire measurement surface can be shortened. Details of the computations will be described later.

Note that the configuration of the detection part to detect the rotation angle of the head uses the combination of the interferometer unit 151 and the rotary encoder 131 configured of two laser lightwave interferometric distance meters in the present embodiment, but it is not so limited. It is only required for the interferometer unit 151 to detect the amount by which the second support 130 is rotated in the θx direction relative to the global coordinate system with respect to the base 100. Also, it is not necessarily the rotary encoder 131 that detects the amount by which the first support 120 is rotated in the θx direction relative to the local coordinate system with respect to the second support 130. Various known detectors can be adopted under these premises.

In the above descriptions, it is assumed that the measurement object 200 is placed on the X-Y stage 160 such that the rotational symmetry axis 210 of the rotationally symmetric surface as the measurement surface 201 strictly coincides with the axis of rotation of the X-Y stage 160 in the θz direction. That is, it is assumed that the measurement object 200 is correctly placed at a target position. However, considering that the measurement object 200 is manually placed on the X-Y stage 160 by the user, it is difficult to correctly place it at the target position. In practice, the measurement object 200 is placed on the X-Y stage 160 with an error relative to the target position.

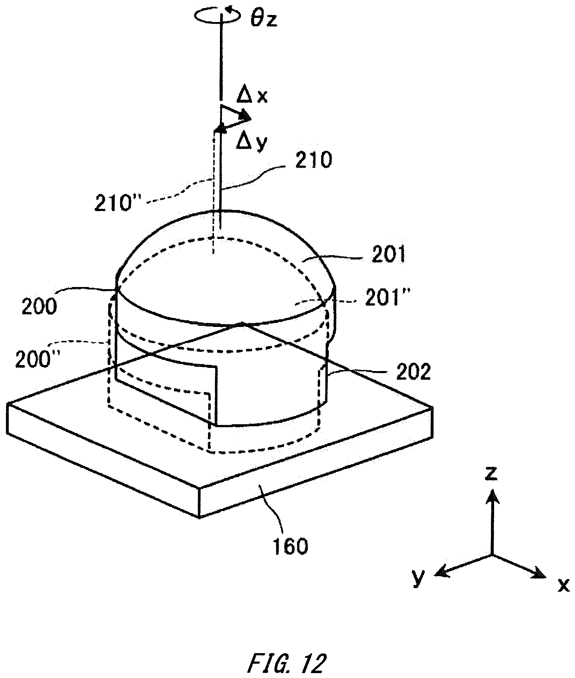

Fig. 12 is an illustration of the placement error of the measurement object 200. The measurement object 200 indicated by the solid line is correctly placed at the target position on the X-Y stage 160. The rotational symmetry axis 210 of the measurement surface 201 coincides with the axis of rotation of the X-Y stage 160 in the θz direction. On the other hand, a measurement object 200" indicated by the dotted line is placed with a deviation relative to the X-Y stage 160. In the example of the figure, the vertex of a measurement surface 201" of the measurement object 200" is deviated by Δx in the x direction and Δy in the y direction relative to the vertex of the measurement surface 201 of the measurement object 200. Note that the chuck 161 to fix the measurement object 200 is omitted in the figure.

The deviation may occur not only in the x direction and the y direction but also in the z direction, the θx direction, the θy direction and the θz direction. It may be due to deviation between the chuck 161 and the X-Y stage 160, deviation between the chuck 161 and the holding part 202 of the measurement object 200 and the like. However, some deviation components can be substantially ignored by precisely configuring the chuck 161 and the X-Y stage 160 with each other or adopting a precisely plane surface as the bottom surface of the measurement object 200. If some deviation components can be substantially ignored, the load of the fitting computation described later is mitigated.

In the present embodiment, the surface shape measurement apparatus 10 presents the amount of unevenness relative to a designed value as a measurement result of the surface shape. The designed value is obtained from design data which represents surface information as a function or plotted data. The design data is acquired in advance from, for example, an input by the user as described above. Thus, in the present embodiment, the placement error relative to the target position is calculated by comparing the surface information of the design data in the case of placement at the target position and the measurement result that is actually measured.

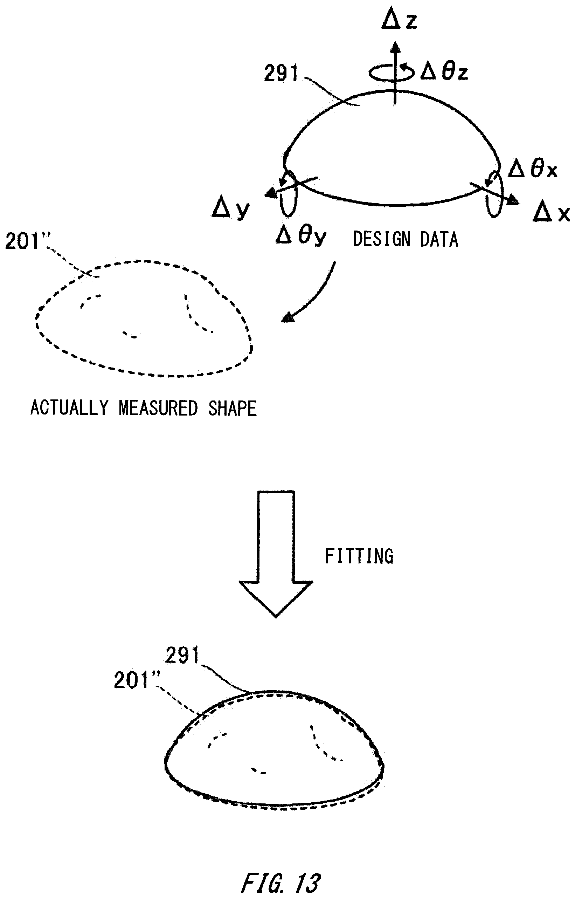

Fig. 13 is a schematic illustration of calculation of the placement error. A temporary surface shape of the measurement surface 201 " placed with a deviation relative to the target position is calculated from the output of the measurement unit 110. As described using Fig. 7, scanning of the measurement unit 110 is performed based on the design data in the case of placement at the target position, and therefore a measurement point recognized by the measurement control part 186 is deviated from an actual measurement point, and the precision of the surface shape that is first calculated is not high. However, unevenness in the surface is minute, and therefore it can be regarded that the entire shape of the surface to be calculated is very close to the surface shape of the design data. Thus, the placement error is calculated by fitting the surface shape of the design data with this actually measured surface shape.

The fitting is an operation of calculating the amounts of movement of the surface shape of the design data when it is moved in the directions of six degrees of freedom by a minute amount for each direction such that the degree of coincidence with the actually measured surface shape is maximum. That is, the placement error is determined by the movement amounts (Δx, Δy, Δz, Δθx, Δθy, Δθz). The fitting computation can utilize a known method such as the least squares method, which minimizes the sum of the squares of the distances between lattice points provided on both surfaces.

Note that, while the fitting computation is performed by comparing the surface shape of the design data and the actually measured surface shape in the present embodiment, the fitting computation may be performed in the dimension of angle for both. That is, by differentiating the function of the design data to the first order to represent it as an angle distribution, it can be directly compared with an actually measured angle distribution as an output of the measurement unit 110. The fitting computation using the angle distribution can precisely calculate the placement error because an integration process is not involved.

The surface shape measurement apparatus 10 is dedicated to rotationally symmetric surfaces as its measurement target but, particularly in the case of a spherical surface among rotationally symmetric surfaces, the amounts of parallel movement until the centers of curvature coincide (Δx, Δy, Δz) can be calculated while the amounts of rotational movement (Δθx, Δθy, Δθz) can not be uniquely defined. In this case, subsequent processes are performed with predetermined value given. It is because, in the case of a spherical surface, the coordinates of the measurement point can be correctly calculated in the ray tracing computation described later as long as the amounts of parallel movement (Δx, Δy, Δz) are grasped.

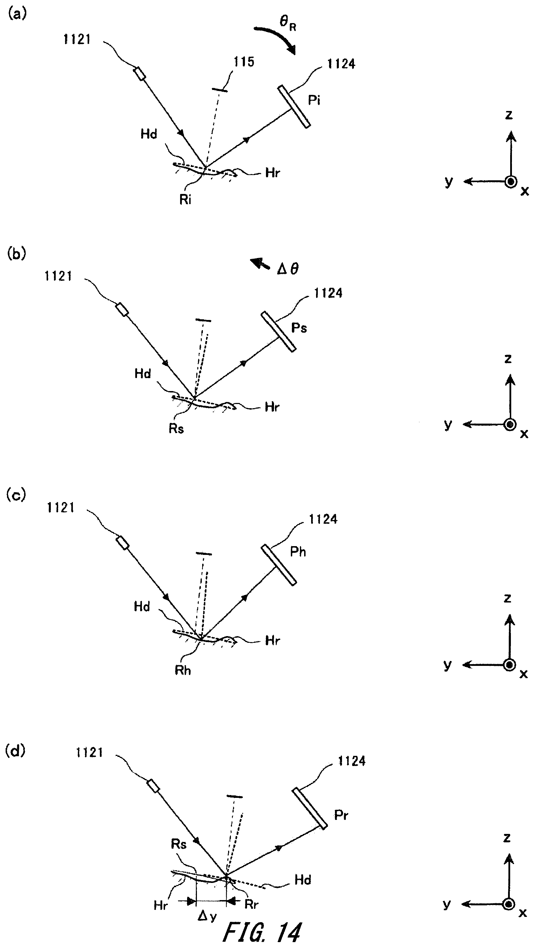

Next, a description will be made of the principle for computing a more accurate surface shape in consideration of the placement error. Fig. 14 is an illustration of the relationship between a position near the measurement point and the second probe light of the angle measurement device 112. The figure represents a simplified view of the angle measurement device 112 with the second light source 1121 and the photodetector 1124. Also, the ideal measurement surface of the design data is represented as a reference measurement surface Hd, and the actual measurement surface is represented as an actually measured measurement surface Hr. Also, the measurement surface has a three-dimensional shape, and therefore each phenomenon is observed as a three-dimensional phenomenon such as that reflected light of the second probe light has a three-dimensional vector, in practice, while the present example is described focusing on phenomena in y-z directions for simplification of descriptions. In order to reconstruct them as three-dimensional phenomena, components in x-z directions and components in x-y directions are taken into account.

Fig. 14 (a) shows the case where the reference measurement surface Hd is arranged at the target position and the reference position 115 of the measurement unit 110 strictly opposes the reference measurement surface Hd. The measurement unit 110 is rotated by θ_{R} in the θx direction, and there is no rotation error of the second support 130. In this case, the second probe light emitted from the second light source 1121, if it is reflected at a measurement point Ri on the reference measurement surface Hd, is incident at an incident point Pi that is the center of the photodetector 1124. That is, the inclination of the surface at the measurement point Ri is detected as zero.

However, the rotation error Δθ of the second support 130 is added to rotational movement of the measurement unit 110 as described above, and therefore a point deviated from the assumed measurement point is to be measured. Fig. 14 (b) shows the case where the reference measurement surface Hd is arranged at the target position and the measurement unit 110 opposes the reference measurement surface Hd with the rotation error Δθ.

As described above, the minute rotation angle Δθ of the second support 130 can be accurately measured by the interferometer unit 151, and therefore the measurement control part 186 accurately grasps an emission position and an emission direction of the second probe light emitted from the second light source 1121. Thus, the computation part 187 receives information of the emission position and the emission direction of the second probe light, and estimates the output of the photodetector 1124 by ray tracing. Specifically, the computation part 187 calculates the coordinates of the measurement point Rs on the reference measurement surface Hd by ray tracing, calculates the normal direction of the reference measurement surface Hd at the measurement point Rs, and obtains a reflection direction of the second probe light using the normal direction. Then, an incident point Ps of the photodetector 1124 is calculated by further performing ray tracing. That is, the estimated output value of the incident point Ps obtained in this process is a value calculated in consideration of the minute rotation angle Δθ of the second support 130 as an error factor.

Note that, in the present embodiment, it is premised that parallel movement of the second support 130 in the y direction and the z direction is accurately performed as controlled. However, even if an error occurs in the parallel movement, the error amount can be accurately measured by the interferometer unit 151 and the Z sensor 155, and therefore the above ray tracing computation can be performed by taking it into account. That is, an estimated output value of the incident point Ps which takes into consideration errors in parallel movement as well as the minute rotation angle Δθ as error factors can be calculated.

Fig. 14 (c) shows the case where the actually measured measurement surface Hr is arranged at the target position and the measurement unit 110 opposes the reference measurement surface Hd with the rotation error Δθ. That is, the relative relationship between the angle measurement device 112 and each of the actually measured measurement surface Hr and the reference measurement surface Hd is similar to the case of Fig. 14 (b). Fig. 14 (c) shows the second probe light in the case of obtaining an actual output value rather than the estimated output value obtained by ray tracing as in Fig. 14 (b).

In this case, the second probe light emitted from the second light source 1121 is incident at the measurement point Rh on the actually measured measurement surface Hr, is reflected according to the inclination of the actually measured measurement surface Hr at the measurement point Rh, and reaches the photodetector 1124. An incident point Ph of the photodetector 1124 is at the coordinates corresponding to the inclination of the actually measured measurement surface Hr, and the photodetector 1124 outputs a detection signal corresponding to the incident point Ph as the actual output value. In this case, the actual output value is a value output with the minute rotation angle Δθ of the second support 130 as an error factor.

The inclination (referred to as α_{d}) of the reference measurement surface Hd at the measurement point Rs is obtained from the ray tracing computation in Fig. 14 (b), and the inclination (referred to as αᵣ) of the actually measured measurement surface Hr at the measurement point Rh is obtained from the actual output value in Fig. 14 (c). Here, there is almost no deviation in a direction orthogonal to the depth direction of unevenness (direction in the tangent plane of the reference measurement surface Hd at the measurement point Rs) between the measurement point Rs and the measurement point Rh, and their positions can be approximated to be the same. Accordingly, the actual inclination relative to the reference measurement surface at the coordinates Rs can be evaluated as αᵣ - α_{d}. If the coordinates Rs are set as the (n = i)-th measurement coordinates, the inclination αᵢ in Fig. 6 is equal to αᵣ - α_{d}. That is, the computation in Fig. 6 can be performed by calculating αᵣ - α_{d}.

Next, consideration will be made of the case where a placement error is further included in the state of Fig. 14 (b). The present example describes the case where there is a placement error of Δy in the y direction, for the sake of simplification. Fig. 14 (d) shows the case where the actually measured measurement surface Hr is arranged at a position deviated by the placement error Δy, and the reference measurement surface Hd is arranged at the target position and the measurement unit 110 opposes the reference measurement surface Hd with the rotation error Δθ. Fig. 14 (d) shows the second probe light in the case of obtaining an actual output value rather than the estimated output value obtained by ray tracing as in Fig. 14 (b).

In this case, the second probe light emitted from the second light source 1121 is incident at a measurement point Rr on the actually measured measurement surface Hr, is reflected according to the inclination of the actually measured measurement surface Hr at the measurement point Rr, and reaches the photodetector 1124. An incident point Pr of the photodetector 1124 is at the coordinates corresponding to the inclination of the actually measured measurement surface Hr, and the photodetector 1124 outputs a detection signal corresponding to the incident point Pr as the actual output value. In this case, the actual output value is a value output with the minute rotation angle Δθ of the second support 130 and the placement error Δy as error factors.

The measurement control part 186 does not grasp the placement error, and therefore the obtained actual output value is recognized as an actual output value for the coordinates Rs of the reference measurement surface Hd calculated by ray tracing in Fig. 14 (b) without consideration of the placement error. In other words, the computation part 187 recognizes the measurement result of the measurement point Rr as the measurement result of the coordinates Rs. That is, it can be regarded that such inconsistency in correspondence is included in the actual output value with the placement error Δy as an error factor.

More specifically, it is regarded that the difference between the actual inclination at the measurement point Rr and the inclination of the reference measurement surface Hd at the coordinates Rs is recognized as the inclination αᵢ at the coordinates Rs. The surface shape obtained by performing the computation described using Fig. 6 on the calculated value including the placement error as an error factor in this manner is the actually measured surface shape described using Fig. 13. That is, the actually measured surface shape that is first derived with the placement error as an error factor may have a low precision. However, as described above, the actually measured surface shape as a whole can be regarded to be very close to the surface shape of the design data, and therefore a placement error amount is calculated by a fitting computation.

When the placement error amount is calculated, the reference measurement surface Hd is rearranged at a position deviated from the target position by the placement error amount and the ray tracing computation in Fig. 14 (b) is performed again. The coordinates of a new measurement point Rs on the reference measurement surface Hd obtained by the recomputation substantially coincide with the coordinates of the measurement point Rr in Fig. 14 (d). Accordingly, the placement error Δy is almost eliminated, and α_{d} and α_{d} at substantially the same point are obtained, and therefore the accurate inclination αᵢ can be calculated. A more precise surface shape can be derived by performing the computation described using Fig. 6 again using αᵢ calculated in this manner.

Note that, if the precision of the actually measured surface shape that is first derived is not so high, the degree of coincidence by the fitting computation is lowered, and therefore the accurate placement error amount may be unable to be calculated. In this case, the above-described computation may be repeatedly performed by subjecting a recomputed surface shape to the the fitting computation again to further calculate a placement error until the degree of coincidence as an evaluation value exceeds a predetermined threshold. In this case, the surface shape derived at the time when the degree of coincidence exceeds the threshold is determined as the final surface shape.

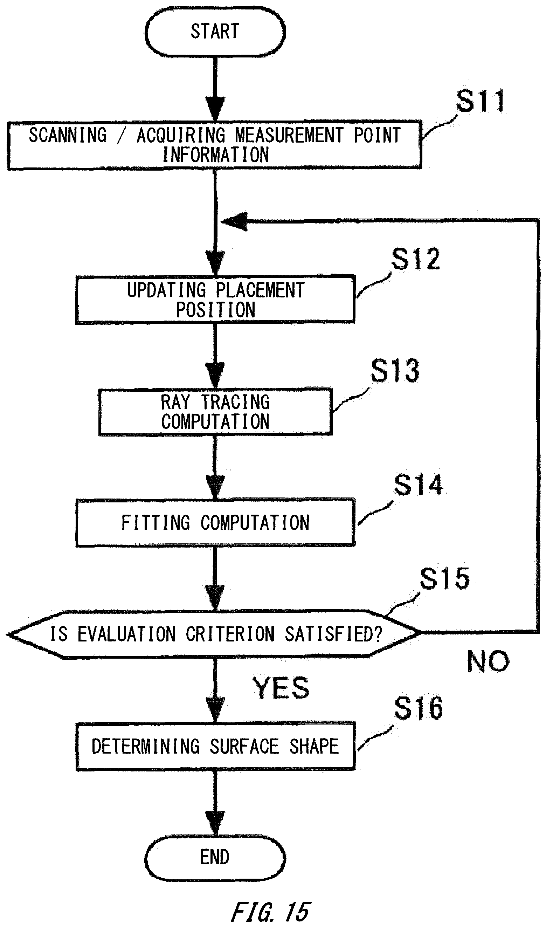

Fig. 15 is a flow chart representing a procedure to obtain a surface shape. The flow starts at the time when the measurement object 200 is placed on the X-Y stage 160 by a user and receives an instruction to start measurement from the user via the user interface 182.

At step S11, the measurement control part 186 drives the X-Y stage 160, the first support 120 and the second support 130 to move the measurement object 200 to an initial position. Then, while driving the X-Y stage 160, the first support 120 and the second support 130 to cause the measurement unit 110 scan the measurement surface 201 as described using Fig. 7 and Fig. 8, outputs of measurement points are obtained by the measurement unit 110 to sequentially accumulate information of the measurement points. When the end point of the measurement points is reached, the flow advances to step S12.

At step S12, the computation part 187 assumes that the measurement object 200 is placed at the target position on the X-Y stage 160, and sets the placement position of the reference measurement surface of the design data as the initial position with zero error amount. The flow proceeds to step S13, and then the computation part 187 performs the ray tracing computation in Fig. 14 (b) and uses the result of the ray tracing computation to perform the computation for acquiring the actually measured surface shape in Fig. 14 (d).

When the actually measured surface shape is acquired, the flow proceeds to step S14, and then the computation part 187 performs the computation of fitting the reference measurement surface and the actually measured surface shape as described using Fig. 13. The placement error amount of the measurement object 200 relative to the X-Y stage 160 is calculated by the fitting computation.

The flow proceeds to step S15, and then the computation part 187 determines whether an evaluation criterion is satisfied or not. Specifically, the evaluation criterion may be whether the calculated placement error amount does not exceed a predetermined reference error amount, or may be whether the maximum degree of coincidence between the reference measurement surface and the actually measured surface shape calculated by the fitting computation exceeds a predetermined threshold. For the evaluation criterion, its reference value may be changed according to a desired measurement precision, the shape of the measurement object 200 or the like, another criterion may be adopted, or a plurality of criteria may be used in combination.

When the computation part 187 determines that the evaluation criterion is not satisfied at step S15, the flow returns to step S12. At step S12, the computation part 187 deviates the placement position of the reference measurement surface by the placement error amount calculated by the fitting computation at step S14. In this manner, it can be expected that the reference measurement surface becomes closer to the actually measured measurement surface 201 than at the time of the previous computation. Then, the steps after step S13 are performed again using a new reference measurement surface.

When it is determined that the evaluation criterion is satisfied at step S15, the flow proceeds to step S16, and then the computation part 187 determines the actually measured surface shape derived as the final measurement result. For example, the actually measured surface shape determined may be converted as a graphic image to display it on the user interface 182. A sequence of processes ends when presentation to the user ends.

While the above embodiment has been described for the case where the measurement surface as the measurement target is a rotationally symmetric surface, the procedure of calculating the placement error amount can be applied even if the measurement surface is not a rotationally symmetric surface. That is, if measurement surface information of the design data and actually measured surface information are obtained, the fitting computation can be performed, and therefore the measurement point for the angle measurement device 112 can be associated with the coordinates from which the placement error is eliminated. Note that, in order to perform actual measurement on a measurement surface that is not a rotationally symmetric surface, the target region can be measured by using movement of the X-Y stage 160 in X-Y directions in combination.

While the embodiments of the present invention have been described, the technical scope of the invention is not limited to the above described embodiments,

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: surface shape measurement apparatus, 100: base, 101: θz driving motor, 102: X-Y driving motor, 103: θz sensor, 104: X-Y sensor, 110: measurement unit, 111: distance measurement device, 112: angle measurement device, 113: holder, 115: reference position, 120: first support, 121: mirror surface, 130: second support, 131: rotary encoder, 132: θx driving motor, 140: first frame, 141: Y-Z driving motor, 150: second frame, 151: interferometer unit, 153: first interferometer, 154: second interferometer, 155: Z sensor, 160: X-Y stage, 161: chuck, 180: control unit, 181: system control part, 182: user interface, 183: memory, 186: measurement control part, 187: computation part, 200: measurement object, 201: measurement surface, 202: holding part, 210: rotational symmetry axis, 1111: first light source, 1112, 1113, 1122: condenser lens, 1114, 1124: photodetector, 1121: second light source, 1123: collimator lens

## Claims

1. A surface shape measurement apparatus (10) comprising:
a stage (160) arranged to support a measurement object;
a measurement device (110) arranged to measure measurement data being surface shape data of the measurement object by scanning said object in a contactless manner, said measurement device comprising an angle measurement device (112) configured to measure inclination of a surface of the measurement object at a measurement point to provide an output value;
a computation part (187) configured to compute by ray tracing computation surface shape data of the measurement object based on said measurement data, including said output value, of the measurement device, predetermined reference shape data of the measurement object, and a sampling interval when scanning, assuming that the object is placed at a target placement position of the measurement object on the stage (160); and
said computation part (187) being further configured to calculate, based on information of the target placement position of the measurement object on the stage, the computed surface shape data and the reference shape data, a placement error between an actual placement position of the measurement object on the stage and the target placement position by comparing surface information of the predetermined reference shape data of the measurement object assuming that the measurement object is placed at a target placement position of the measurement object on the stage and the surface shape data that is computed by the computation part, the comparing being performed by fitting the surface shape of the predetermined reference shape data with surface shape data that is computed by the computation part, whereby the computation part is configured to compute by ray tracing computation updated surface shape data of the measurement object assuming that the measurement object is placed at a placement position of the measurement object on the stage which is deviated from the target placement position by the placement error to update surface shape data of the measurement object using the placement error.

2. The surface shape measurement apparatus according to claim 1, wherein
the calculation part is configured to update the target placement position using the placement error, and to recalculate a placement error between an actual placement position of the measurement object on the stage and the target placement position based on surface shape data updated by the computation part, and
the computation part is configured to further reupdate surface shape data of the measurement object using the recalculated placement error between the actual placement position of the measurement object on the stage and the target placement position.

3. The surface shape measurement apparatus according to claim 1 or 2, wherein measurement using the measurement device is not performed again after the placement error is calculated.

4. The surface shape measurement apparatus according to any one of claims 1 to 3, wherein
the measurement device is arranged to measure the inclination of the surface of the measurement object at a measurement point using first probe light (PL2), and
the computation part is configured to reupdate surface shape data of the measurement object based on an emission position and an emission direction of the first probe light and the reference shape data in a case of placement at the target placement position or an updated placement position updated using the placement error.

5. The surface shape measurement apparatus according to claim 4, comprising:
a support (120) arranged to support the measurement device;
a driving part (132, 141) arranged to move the support relative to the measurement object; and
a control part (186) configured to control the driving part, wherein
the measurement device includes a distance measurement device (111) arranged to measure a distance to the measurement point using second probe light (PL1), and
the control part is configured to cause the support to scan by the driving part using an output value of the distance measurement device such that a distance from the measurement device to the measurement point is constant.

6. The surface shape measurement apparatus according to claim 4 or 5, wherein the computation part is configured to derive surface shape data of the measurement object by integral computation using an output of the angle measurement device.

7. The surface shape measurement apparatus according to any one of claims 1 to 6, wherein the reference shape data is design data of the measurement object.

8. A surface shape measurement method to measure a surface shape of a measurement object comprising:
a measurement step to measure measurement data being surface shape data of the measurement object by scanning said object in a contactless manner, comprising measuring inclination of a surface of the measurement object at a measurement point using a measurement device (110) comprising an angle measurement device (112) to provide an output value;
the method comprising the following computer implemented steps:
an acquisition step to acquire reference shape data of the surface shape;
a computation step (S13) to compute by ray tracing computation surface shape data of the measurement object based on said measurement data, including said output value, of the measurement device, the reference shape data and a sampling interval when scanning, assuming that the object is placed at a target placement position of the measurement object on the stage (160);
a calculation step (S14) to calculate, based on information of a target placement position of the measurement object on a stage (160) which supports the measurement object, the computed surface shape data and the reference shape data, a placement error between an actual placement position of the measurement object on the stage and the target placement position by comparing surface information of the predetermined reference shape data of the measurement object assuming that the measurement object is placed at a target placement position of the measurement object on the stage and the surface shape data that is computed by the computation part, the comparing being performed by fitting the surface shape of the predetermined reference shape data with surface shape data that is computed by the computation part; and
an updating step to compute by ray tracing calculation updated surface shape data of the measurement object assuming that the measurement object is placed at a placement position of the measurement object on the stage which is deviated from the target placement position by the placement error to update the surface shape data of the measurement object using the placement error calculated in the calculation step.

9. The surface shape measurement method according to claim 8, which repeatedly performs:
the calculation step to update the target placement position using the placement error and to recalculate a placement error between an actual placement position of the measurement object and the target placement position using the surface shape data reupdated in the reupdating step; and
the reupdating step to further reupdate surface shape data of the measurement object using the recalculated placement error.

10. The surface shape measurement method according to claim 8 or 9, wherein
the measurement device measures the inclination of the surface of the measurement object at a measurement point using first probe light (PL2),
in the reupdating step, surface shape data of the measurement object is updated based on an emission position and an emission direction of the first probe light and the reference shape data for a case of placement at the target placement position, and
in the reupdating step, surface shape data of the measurement object is reupdated based on the emission position and the emission direction of the first probe light and the reference shape data in a case of placement at an updated placement position updated using the placement error.

11. A surface shape measurement program to measure a surface shape of a measurement object, wherein the surface shape measurement program is executable to cause a surface shape measurement apparatus according to claims 1-7 to perform the method according to any one of claims 8-10.

12. A computer readable recording medium storing the program according to claim 11.

## Patentansprüche

1. Oberflächenform-Messeinrichtung (10), umfassend:
einen Tisch (160), der zum Tragen eines Messobjekts angeordnet ist;
eine Messvorrichtung (110), die angeordnet ist, um Messdaten zu messen, die Oberflächenformdaten des Messobjekts sind, indem das Objekt berührungslos abgetastet wird, wobei die Messvorrichtung eine Winkelmessvorrichtung (112) umfasst, die konfiguriert ist, um die Neigung einer Oberfläche des Messobjekts an einem Messpunkt zu messen, um einen Ausgabewert bereitzustellen;
einen Berechnungsteil (187), der konfiguriert ist, um durch Strahlenverfolgungsberechnung Oberflächenformdaten des Messobjekts basierend auf den Messdaten, einschließlich des Ausgabewerts, der Messvorrichtung, vorbestimmten Referenzformdaten des Messobjekts und eines Abtastintervalls beim Abtasten unter der Annahme zu berechnen, dass das Objekt an einer Zielplatzierungsposition des Messobjekts auf dem Tisch (160) platziert ist;
und
wobei der Berechnungsteil (187) weiter konfiguriert ist, um basierend auf Informationen über die Zielplatzierungsposition des Messobjekts auf dem Tisch, die berechneten Oberflächenformdaten und die Referenzformdaten einen Platzierungsfehler zwischen einer tatsächlichen Platzierungsposition des Messobjekts auf dem Tisch und der Zielplatzierungsposition zu berechnen, indem Oberflächeninformationen der vorbestimmten Referenzformdaten des Messobjekts unter der Annahme, dass das Messobjekt an einer Zielplatzierungsposition des Messobjekts auf dem Tisch platziert ist, und die Oberflächenformdaten, die durch den Berechnungsteil berechnet werden, verglichen werden, wobei der Vergleich durch Anpassen der Oberflächenform der vorbestimmten Referenzformdaten mit Oberflächenformdaten durchgeführt wird, die durch den Berechnungsteil berechnet werden, wobei
der Berechnungsteil konfiguriert ist, um durch Strahlenverfolgungsberechnung aktualisierte Oberflächenformdaten des Messobjekts unter der Annahme zu berechnen, dass das Messobjekt an einer Platzierungsposition des Messobjekts auf dem Tisch platziert ist, die von der Zielplatzierungsposition durch den Platzierungsfehler abweicht, um Oberflächenformdaten des Messobjekts unter Verwendung des Platzierungsfehlers zu aktualisieren.

2. Oberflächenform-Messeinrichtung nach Anspruch 1, wobei
der Kalkulationsteil konfiguriert ist, um die Zielplatzierungsposition unter Verwendung des Platzierungsfehlers zu aktualisieren und einen Platzierungsfehler zwischen einer tatsächlichen Platzierungsposition des Messobjekts auf dem Tisch und der Zielplatzierungsposition basierend auf Oberflächenformdaten, die durch den Berechnungsteil aktualisiert wurden, neu zu berechnen, und
der Berechnungsteil konfiguriert ist, um weiter Oberflächenformdaten des Messobjekts unter Verwendung des neu berechneten Platzierungsfehlers zwischen der tatsächlichen Platzierungsposition des Messobjekts auf dem Tisch und der Zielplatzierungsposition neu zu aktualisieren.

3. Oberflächenform-Messeinrichtung nach Anspruch 1 oder 2, wobei die Messung unter Verwendung der Messvorrichtung nicht erneut durchgeführt wird, nachdem der Platzierungsfehler berechnet wurde.

4. Oberflächenform-Messeinrichtung nach einem der Ansprüche 1 bis 3, wobei
die Messvorrichtung angeordnet ist, um die Neigung der Oberfläche des Messobjekts an einem Messpunkt unter Verwendung von erstem Sondenlicht (PL2) zu messen, und
der Berechnungsteil konfiguriert ist, um Oberflächenformdaten des Messobjekts basierend auf einer Emissionsposition und einer Emissionsrichtung des ersten Sondenlichts und den Referenzformdaten für einen Fall der Platzierung an der Zielplatzierungsposition oder einer aktualisierten Platzierungsposition, die unter Verwendung des Platzierungsfehlers aktualisiert wurde, neu zu aktualisieren.

5. Oberflächenform-Messeinrichtung nach Anspruch 4, umfassend:
einen Träger (120), der angeordnet ist, um die Messvorrichtung zu tragen;
einen Antriebsteil (132, 141), der angeordnet ist, um den Träger relativ zum Messobjekt zu bewegen; und
einen Steuerteil (186), der konfiguriert ist, um den Antriebsteil zu steuern, wobei
die Messvorrichtung eine Abstandsmessvorrichtung (111) einschließt, die angeordnet ist, um einen Abstand zu dem Messpunkt unter Verwendung von zweitem Sondenlicht (PL1) zu messen, und
der Steuerteil konfiguriert ist, um zu verursachen, dass der Träger durch den Antriebsteil unter Verwendung eines Ausgabewerts der Abstandsmessvorrichtung abtastet, sodass ein Abstand von der Messvorrichtung zum Messpunkt konstant ist.

6. Oberflächenform-Messeinrichtung nach Anspruch 4 oder 5, wobei der Berechnungsteil konfiguriert ist, um Oberflächenformdaten des Messobjekts durch integrale Berechnung unter Verwendung einer Ausgabe der Winkelmessvorrichtung abzuleiten.

7. Oberflächenform-Messeinrichtung nach einem der Ansprüche 1 bis 6, wobei die Referenzformdaten Gestaltungsdaten des Messobjekts sind.

8. Oberflächenform-Messverfahren zum Messen einer Oberflächenform eines Messobjekts, umfassend:
einen Messschritt zum Messen von Messdaten, die Oberflächenformdaten des Messobjekts sind, durch berührungsloses Abtasten des Objekts,
umfassend Messen einer Neigung einer Oberfläche des Messobjekts an einem Messpunkt unter Verwendung einer Messvorrichtung (110), die eine Winkelmessvorrichtung (112) umfasst, um einen Ausgabewert bereitzustellen;
wobei das Verfahren die folgenden computerimplementierten Schritte umfasst:
einen Erfassungsschritt zum Erfassen von Referenzformdaten der Oberflächenform;
einen Berechnungsschritt (S13), um durch Strahlenverfolgungsberechnung Oberflächenformdaten des Messobjekts basierend auf den Messdaten, einschließlich des Ausgabewerts, der Messvorrichtung, den Referenzformdaten und eines Abtastintervalls beim Abtasten unter der Annahme zu berechnen, dass das Objekt an einer Zielplatzierungsposition des Messobjekts auf dem Tisch (160) platziert ist;
einen Kalkulationsschritt (S14), um basierend auf Informationen über eine Zielplatzierungsposition des Messobjekts auf einem Tisch (160), der das Messobjekt trägt, den berechneten Oberflächenformdaten und den Referenzformdaten einen Platzierungsfehler zwischen einer tatsächlichen Platzierungsposition des Messobjekts auf dem Tisch und der Zielplatzierungsposition zu berechnen, indem Oberflächeninformationen der vorbestimmten Referenzformdaten des Messobjekts unter der Annahme, dass das Messobjekt an einer Zielplatzierungsposition des Messobjekts auf dem Tisch platziert ist, mit den Oberflächenformdaten, die durch den Berechnungsteil berechnet werden, verglichen werden, wobei der Vergleich durch Anpassen der Oberflächenform der vorbestimmten Referenzformdaten mit Oberflächenformdaten durchgeführt wird, die durch den Berechnungsteil berechnet werden; und
einen Aktualisierungsschritt, um durch Strahlenverfolgungsberechnung aktualisierte Oberflächenformdaten des Messobjekts unter der Annahme zu berechnen, dass das Messobjekt an einer Platzierungsposition des Messobjekts auf dem Tisch platziert ist, die von der Zielplatzierungsposition durch den Platzierungsfehler abweicht, um die Oberflächenformdaten des Messobjekts unter Verwendung des im Kalkulationsschritt berechneten Platzierungsfehlers zu aktualisieren.

9. Oberflächenform-Messverfahren nach Anspruch 8, das wiederholt Folgendes durchführt:
den Kalkulationsschritt, um die Zielplatzierungsposition unter Verwendung des Platzierungsfehlers zu aktualisieren und einen Platzierungsfehler zwischen einer tatsächlichen Platzierungsposition des Messobjekts und der Zielplatzierungsposition unter Verwendung der im Neuaktualisierungsschritt neu aktualisierten Oberflächenformdaten neu zu berechnen; und
den Neuaktualisierungsschritt zum weiteren neuen Aktualisieren von Oberflächenformdaten des Messobjekts unter Verwendung des neu berechneten Platzierungsfehlers.

10. Oberflächenform-Messeinrichtung nach Anspruch 8 oder 9, wobei
die Messvorrichtung die Neigung der Oberfläche des Messobjekts an einem Messpunkt unter Verwendung von erstem Sondenlicht (PL2) misst,
in dem Neuaktualisierungsschritt Oberflächenformdaten des Messobjekts basierend auf einer Emissionsposition und einer Emissionsrichtung des ersten Sondenlichts und den Referenzformdaten für einen Fall der Platzierung an der Zielplatzierungsposition aktualisiert werden, und
in dem Neuaktualisierungsschritt Oberflächenformdaten des Messobjekts basierend auf der Emissionsposition und der Emissionsrichtung des ersten Sondenlichts und den Referenzformdaten für einen Fall der Platzierung an einer aktualisierten Platzierungsposition, die unter Verwendung des Platzierungsfehlers aktualisiert wurde, neu aktualisiert werden.

11. Oberflächenform-Messprogramm zum Messen einer Oberflächenform eines Messobjekts, wobei das Oberflächenform-Messprogramm ausführbar ist, um eine Oberflächenform-Messeinrichtung nach einem der Ansprüche 1-7 zu veranlassen, das Verfahren nach einem der Ansprüche 8-10 durchzuführen.

12. Computerlesbares Aufzeichnungsmedium, das das Programm nach Anspruch 11 speichert.

## Revendications

1. Appareil de mesure de forme de surface (10) comprenant :
un plateau (160) agencé de manière à supporter un objet de mesure ;
un dispositif de mesure (110) agencé de manière à mesurer des données de mesure qui sont des données de forme de surface de l'objet de mesure en balayant ledit objet d'une manière sans contact, ledit dispositif de mesure comprenant un dispositif de mesure d'angle (112) configuré de manière à mesurer une inclinaison d'une surface de l'objet de mesure en un point de mesure dans le but de fournir une valeur de sortie ;
une partie de calcul (187) configurée de manière à calculer par un calcul de lancer de rayons des données de forme de surface de l'objet de mesure sur la base desdites données de mesure, incluant ladite valeur de sortie, du dispositif de mesure, des données de forme de référence prédéterminées de l'objet de mesure et un intervalle d'échantillonnage lors du balayage, en supposant que l'objet soit placé au niveau d'une position de placement cible de l'objet de mesure sur le plateau (160) ;
et
ladite partie de calcul (187) étant en outre configurée de manière à calculer, sur la base d'informations relatives à la position de placement cible de l'objet de mesure sur le plateau, des données de forme de surface calculées et des données de forme de référence, une erreur de placement entre une position de placement courante de l'objet de mesure sur le plateau et la position de placement cible en comparant des informations de surface des données de forme de référence prédéterminées de l'objet de mesure, en supposant que l'objet de mesure soit placé au niveau d'une position de placement cible de l'objet de mesure sur le plateau, et les données de forme de surface qui sont calculées par la partie de calcul, la comparaison étant effectuée en ajustant la forme de surface des données de forme de référence prédéterminées avec des données de forme de surface qui sont calculées par la partie de calcul, de sorte que
la partie de calcul est configurée de manière à calculer par un calcul de lancer de rayons des données de forme de surface mises à jour de l'objet de mesure en supposant que l'objet de mesure est placé au niveau d'une position de placement de l'objet de mesure sur le plateau qui est déviée par rapport à la position de placement cible par l'erreur de placement afin de mettre à jour des données de forme de surface de l'objet de mesure en utilisant l'erreur de placement.

2. Appareil de mesure de forme de surface selon la revendication 1, dans lequel
la partie de calcul est configurée de manière à mettre à jour la position de placement cible en utilisant l'erreur de placement, et à recalculer une erreur de placement entre une position de placement courante de l'objet de mesure sur le plateau et la position de placement cible sur la base de données de forme de surface mises à jour par la partie de calcul, et
la partie de calcul est configurée de manière à remettre à jour en outre des données de forme de surface de l'objet de mesure en utilisant l'erreur de placement recalculée entre la position de placement courante de l'objet de mesure sur le plateau et la position de placement cible.

3. Appareil de mesure de forme de surface selon la revendication 1 ou la revendication 2, dans lequel la mesure en utilisant le dispositif de mesure n'est pas effectuée une nouvelle fois après que l'erreur de placement a été calculée.

4. Appareil de mesure de forme de surface selon l'une quelconque des revendications 1 à 3, dans lequel
le dispositif de mesure est agencé de manière à mesurer l'inclinaison de la surface de l'objet de mesure en un point de mesure en utilisant une première lumière de sonde (PL2), et
la partie de calcul est configurée de manière à remettre à jour des données de forme de surface de l'objet de mesure sur la base d'une position d'émission et d'une direction d'émission de la première lumière de sonde ainsi que des données de forme de référence dans un cas d'un placement au niveau de la position de placement cible ou d'une position de placement mise à jour en utilisant l'erreur de placement.

5. Appareil de mesure de forme de surface selon la revendication 4, comprenant :
un support (120) agencé de manière à supporter le dispositif de mesure ;
une partie d'entraînement (132, 141) agencée de manière à déplacer le support par rapport à l'objet de mesure ; et
une partie de commande (186) configurée de manière à commander la partie d'entraînement, dans lequel
le dispositif de mesure inclut un dispositif de mesure de distance (111) agencé de manière à mesurer une distance par rapport au point de mesure en utilisant une seconde lumière de sonde (PL1), et
la partie de commande est configurée de manière à entraîner le balayage du support par la partie d'entraînement en utilisant une valeur de sortie du dispositif de mesure de distance de telle sorte qu'une distance du dispositif de mesure au point de mesure soit constante.

6. Appareil de mesure de forme de surface selon la revendication 4 ou la revendication 5, dans lequel la partie de calcul est configurée de manière à dériver des données de forme de surface de l'objet de mesure par un calcul intégral en utilisant une sortie du dispositif de mesure d'angle.

7. Appareil de mesure de forme de surface selon l'une quelconque des revendications 1 à 6, dans lequel les données de forme de référence sont des données de conception de l'objet de mesure.

8. Procédé de mesure de forme de surface pour mesurer une forme de surface d'un objet de mesure, comprenant :
une étape de mesure pour mesurer des données de mesure qui sont des données de forme de surface de l'objet de mesure en balayant ledit objet d'une manière sans contact,
comprenant une mesure d'une inclinaison d'une surface de l'objet de mesure en un point de mesure en utilisant un dispositif de mesure (110) comprenant un dispositif de mesure d'angle (112) dans le but de fournir une valeur de sortie ;
le procédé comprenant les étapes suivantes mises en oeuvre par un ordinateur :
une étape d'acquisition pour acquérir des données de forme de référence de la forme de surface ;
une étape de calcul (S13) pour calculer par un calcul de lancer de rayons des données de forme de surface de l'objet de mesure sur la base desdites données de mesure, incluant ladite valeur de sortie, du dispositif de mesure, les données de forme de référence et un intervalle d'échantillonnage lors du balayage, en supposant que l'objet soit placé au niveau d'une position de placement cible de l'objet de mesure sur le plateau (160) ;
une étape de calcul (S14) pour calculer, sur la base d'informations relatives à une position de placement cible de l'objet de mesure sur un plateau (160) qui supporte l'objet de mesure, des données de forme de surface calculées et des données de forme de référence, une erreur de placement entre une position de placement courante de l'objet de mesure sur le plateau et la position de placement cible en comparant des informations de surface des données de forme de référence prédéterminées de l'objet de mesure, en supposant que l'objet de mesure soit placé au niveau d'une position de placement cible de l'objet de mesure sur le plateau, et les données de forme de surface qui sont calculées par la partie de calcul, la comparaison étant effectuée en ajustant la forme de surface des données de forme de référence prédéterminées avec des données de forme de surface qui sont calculées par la partie de calcul ; et
une étape de mise à jour pour calculer par un calcul de lancer de rayons des données de forme de surface mises à jour de l'objet de mesure en supposant que l'objet de mesure est placé au niveau d'une position de placement de l'objet de mesure sur le plateau qui est déviée par rapport à la position de placement cible par l'erreur de placement afin de mettre à jour les données de forme de surface de l'objet de mesure en utilisant l'erreur de placement calculée lors de l'étape de calcul.

9. Procédé de mesure de forme de surface selon la revendication 8, qui effectue de façon répétée :
l'étape de calcul pour mettre à jour la position de placement cible en utilisant l'erreur de placement et pour recalculer une erreur de placement entre une position de placement courante de l'objet de mesure et la position de placement cible en utilisant les données de forme de surface remises à jour lors de l'étape de remise à jour ; et
l'étape de remise à jour pour remettre à jour en outre des données de forme de surface de l'objet de mesure en utilisant l'erreur de placement recalculée.

10. Procédé de mesure de forme de surface selon la revendication 8 ou la revendication 9, dans lequel
le dispositif de mesure mesure l'inclinaison de la surface de l'objet de mesure en un point de mesure en utilisant une première lumière de sonde (PL2),
lors de l'étape de remise à jour, des données de forme de surface de l'objet de mesure sont mises à jour sur la base d'une position d'émission et d'une direction d'émission de la première lumière de sonde ainsi que des données de forme de référence pour un cas d'un placement au niveau de la position de placement cible, et
lors de l'étape de remise à jour, des données de forme de surface de l'objet de mesure sont remises à jour sur la base de la position d'émission et de la direction d'émission de la première lumière de sonde ainsi que des données de forme de référence dans un cas d'un placement au niveau d'une position de placement mise à jour en utilisant l'erreur de placement.

11. Programme de mesure de forme de surface pour mesurer une forme de surface d'un objet de mesure, dans lequel le programme de mesure de forme de surface est exécutable pour amener un appareil de mesure de forme de surface selon les revendications 1 à 7 à effectuer le procédé selon l'une quelconque des revendications 8 à 10.

12. Support d'enregistrement lisible par ordinateur stockant le programme selon la revendication 11.
